# EUROPÄISCHE PATENTSCHRIFT

(11) **EP 1 188 152 B1**
(45) Veröffentlichungstag und Bekanntmachung des Hinweises auf die Patenterteilung: **23.03.2005**
(21) Anmeldenummer: 00940274.4
(22) Anmeldetag: 26.05.2000
(51) Int. Cl.: G07F 7/00, G07C 9/00

(54) **AKUSTISCH MECHANISCHES VERIFIKATIONS- SENDEGERÄT**
ACOUSTIC-MECHANICAL VERIFICATION TRANSMITTER
EMETTEUR DE VERIFICATION ACOUSTIQUE-MECANIQUE

(30) Priorität: 04.06.1999 DE 19925509
(43) Veröffentlichungstag der Anmeldung: 20.03.2002
(73) Patentinhaber: Deutsche Telekom AG, 53113 Bonn (DE)
(72) Erfinder: TRINKEL, Marian, D-52372 Kreuzau OT Untermaubach (DE)
(86) Internationale Anmeldenummer: PCT/EP2000/004816
(87) Internationale Veröffentlichungsnummer: WO 2000/075880

(56) Entgegenhaltungen:
- WO-A-99/34324
- DE-C- 4 435 170
- DE-U- 29 722 679
- US-A- 3 628 499
- US-A- 3 886 327

## Beschreibung

Die Erfindung betrifft ein System umfassend ein tragbares Identifikationsmedium, insbesondere in Form einer Karte, und eine Kontrolleinheit, mit der auf dem Identifikationsmedium kodierte Information lesbar ist, wobei die Kontrolleinheit einem Benutzer den Zugang zum System freigibt, wenn die Identität des Identifikationsmediums festgestellt ist. Die Erfindung betrifft zudem das Identifikationsmedium selbst.

Derartige Systeme, bei denen sich ein Benutzer über ein Identifikationsmedium identifiziert, sind in vielfältiger Weise bekannt. Dabei dient das Medium als Schlüssel für den Zugang zu dem System. Das Medium wird dabei der Kontrolleinheit zugeführt und sobald diese feststellt, daß es sich um ein authorisiertes Medium - einen passenden Schlüssel - handelt, gibt sie den Zugang zum System frei. Bei den bisher bekannten Systemen wird auf dem Medium, einer Karte, als individualisierende Information ein numerischer Code beispielsweise eine Kundennummer auf einem Magnetstreifen oder einem Chip niedergelegt. Der Code wird dann mittels eines entsprechenden in der Kontrolleinheit integrierten Lesegerätes ausgelesen und von einer Rechenanlage überprüft.
Nachteil dieser Systeme ist, daß nicht nur das Medium mit einem Magnetstreifen oder einem Chip ausgerüstet sein muß, was verhältnismäßig aufwendig und teuer ist, sondern daß vor allem die Kontrolleinheit mit entsprechend aufwendigen Mitteln zur Auslese der Information versehen sein muß. So muß die Kontrolleinheit insbesondere eine Aufnahme für das Medium besitzen. Diese Aufnahme, beispielsweise ein Schlitz mit entsprechender Mechanik, ist aufwendig und für Vandalismus anfällig.
Es sind außerdem derartige Systeme bekannt, bei denen der Code akustisch mittels eines auf dem Medium befindlichen elektronischen Tongenerators übermittelt wird. Bei diesen Systemen ist das Medium wegen des Generators aufwendig und teuer. Außerdem ist die Übertragung sehr unzuverlässig und führt oft zu Systemfehlern. Es sind weiterhin Vorrichtungen in
Form von Karten z.B. aus den Dokumenten DE 297 22 679 U1 und DE 44 35 170 C1 bekannt, die an einer Kante ein Profil mit Zähnen aufweisen, wobei die Information in der Anordnung der Zähne codiert ist. Das akustische Signal wird dadurch erzeugt, daß das Profil mit einem Gegenstand überstrichen wird, wobei ein Geräusch entsteht. Dabei ist es nachteilig, daß neben dem Medium ein weiterer Gegenstand vorhanden sein muß, mit dem das Signal erzeugt wird. Durch den zusätzlich benötigten Gegenstand ist das System aufwendig und unpraktikabel. Außerdem ist das Signal nur schwer reproduzierbar, da es von der Geschwindigkeit und der Vollständigkeit des Überstreichens abhängt.

Außerdem sind System bekannt, die eine Identifikation mittels gesprochener Sprache herbeiführen. Diese Systeme sind aufwendig und wenig zuverlässig, da sie von einer Vielzahl unberechenbarer Parameter abhängig sind.

Aufgabe der Erfindung ist es daher, ein System zu schaffen, das robust ist und bei großer Zuverlässigkeit und Reproduzierbarkeit einfach zu handhaben und kostengünstig herzustellen ist. Gleichzeitig ist es Aufgabe der Erfindung ein Identifikationsmedium zu schaffen, welches das erfindungsgemäße System unterstützt und dabei zuverlässig, robust und kostengünstig ist.

Diese Aufgabe wird durch das System nach Anspruch 1 und durch das Identifikationsmedium nach Anspruch 6 gelöst.

Wesentlicher Gesichtspunkt der Erfindung ist, daß an dem Identifikationsmedium ein Mittel angebracht ist, das nach einer Krafteinwirkung durch mechanische Beaufschlagung, beispielsweise nach Drücken durch den Benutzer, ein akustisches Signal abgibt, anhand dessen das Medium identifiziert werden kann. Um eine sichere Identifikation zu ermöglichen ist es notwendig, daß das akustische Signal, dessen Frequenzspektum Informationen kodiert, reproduzierbar ist. Ein erzeugtes Signal muß jedem weiteren erzeugten Signal möglichst genau entsprechen.
Die Anwendung eines derartigen Systemes ist in vielen Bereichen vortstellbar. So ist es möglich, Telephonkarten oder Kreditkarten mit den erfindungsgemäßen Mitteln zu versehen. Bei einer Telephonkarte würde das akustische Signal über ein Mikrophon an der Telephonanlage, beispielsweise durch den Hörer, aufgenommen und via der Telephonleitung an einen Zentralrechner geschickt. Dieser würde dann die Abrechnung des Telephongespräches vornehmen, wobei die Abrechnung über das akustische Signal dem Inhaber der Karte zugeordnet ist. Im Falle einer Kreditkarte könnten im Signal die Kunden- bzw. die Kontonummer des Karteninhabers codiert sein. Dabei ist es jedoch vorteilhaft, wenn der Benutzer sich durch Eingabe eines nur ihm bekannten Pin-Codes in die Kontrolleinheit authorisiert.
Besonderer Vorteil der Erfindung ist, daß derartige Systeme robust und einfach sind. So läßt sich das akustische Signal von einem einfachen, in die Kontrolleinheit integrierten Mikrophon aufnehmen. Auf eine komplizierte Elektronik mit Lesekopf und vor allem auf die Einschuböffnung kann verzichtet werden. Dabei stehen bekannte Systeme, insbesondere Spracherkennungssysteme, zur Auswertung der akustischen Information zur Verfügung. Mittels des Systems ist eine zuverlässige Identifikation des Mediums möglich.
Grundsätzlich können als Signal erzeugende Mittel Saiten, Stäbe, Zungen, Membranen, Platten und oder Luftsäulen eingesetzt werden. Besonders einfach und damit vorteilhaft ist es jedoch, wenn das Mittel zur Erzeugung des Signales eine Zunge und/oder eine gewölbte Fläche aufweist, die derart auf dem Medium befestigt ist, daß sie durch Drücken mit einem Finger des Benutzers über einen Widerstand beaufschlagt werden kann und bei Überwindung des Widerstandes das Signal ("Knack") abgibt. Derartige Vorrichtungen sind als Spielzeuge (Knack-Frösche) bekannt. Nach dem Überwinden der Knack-Schwelle federt das Mittel wieder in die Ausgangsposition zurück. Dabei kann das beim Zurückfedern abgegebene meist andersartige Geräusch ("Knick") ebenfalls zur Kodierung von Information herangezogen werden.
Die Kodierung der Information erfolgt dabei in einer besonders vorteilhaften Ausführungsform durch die individuelle Formgebung der Zunge bzw. der Fläche und/oder durch die Gestaltung deren Aufhängung, also beispielsweise durch die Veränderung des zu überwindenden Widerstandes. Umfangreiche Versuche haben gezeigt, daß sich durch ein solches Mittel ein individuelles Signal erzeugen läßt, an dessen Frequenzspektrum, vorteilhafterweise nach einer Fourier-Transformation, sich die kodierte Information zuverlässig abgelesen werden kann. Im Laufe der Zeit verändert sich die Charakteristik nicht oder nur wenig, wobei eine solche Veränderung über die Rechenalgorithmen berücksichtigt werden kann. Eine Kodierung der Information durch individuelle Formgebung des Resonanzkörpers ist ebenfalls denkbar, wobei die Individualisierung hierbei durch gravierendere Maßnahmen erfolgen muß.
Besonderer Vorteil des erfindungsgemäßen Mediums ist, daß es keinerlei aufwendige Elektronik und insbesondere keine Batterie beinhaltet, so daß die Entsorgung keine Probleme bereitet. Dabei ist die "Knack-Frosch-Funktion" einfach zu realisieren und bietet eine hohe Variationsmöglichkeit der kodierten Information. Sie läßt sich in ein robustes Medium insbesondere in Form einer Karte einfach integrieren. Eine solche Karte mit integrierter "Knack-Frosch-Funktion" ist beständig und zeichnet sich durch ihre kompakte Bauweise aus. Sie läßt sich zudem einfach und preiswert herstellen und ist für den Einsatz in Telekummunikationsmedien, die das Sprach-Frequenzband nutzen, besonders geeignet. Als Vorteil ist hervorzuheben, daß das erfindungsgemäße Medium zur Generierung des Signales keiner weiteren Hilfsmittel, wie sie bislang im Stand der Technik nötig waren, bedarf.
In einer besonders einfachen Ausführungsform ist die Zunge bzw. die gewölbte Fläche an dem als Karte ausgebildeten Identifikationsmedium angeformt. Um einen widerstand zu erzeugen, ist es vorteilhaft, die Zunge mit einer Längsnut oder mit senkrecht zur der Deckfläche der Karte abstehenden Wänden zu versehen. Auch mit einer beidseitig umlaufenden Einspannung ist ein "Knack"-Effekt zu erzielen. Durch die Anformung ist eine gute Ankoppelung des Mittels an den Resonanzkörper und damit eine entsprechend gute Schallverstärkung gegeben.
Besonders vorteilhaft ist es, wenn die Codierung durch den Benutzer selber durchführbar ist. Dazu können dem Benutzer entsprechende Möglichkeiten vorgegeben werden. So erhält der Nutzer beispielsweise eine Karte, deren Zunge noch keine Veränderung aufweist und die daher ein Grundgeräusch abgibt. Die Individualisierung erfolgt dann durch den Benutzer durch Ausstanzen oder Eindrücken von Vertiefungen in die Zunge oder durch Formgebung der gewölbten Fläche. Dabei bewirkt die mechanische Variation eine akustische Variation. Das so generierte Geräusch wird anschließend zusammen mit den nötigen Informationen in einer Datenbank gespeichert. Die Karte ist somit initialisiert.
In einer besonders vorteilhaften Ausführungsform ist das Medium als Schlüsselanhänger ausgebildet und somit jederzeit griffbereit und unverlierbar. Es kann außerdem vorteilhaft sein, das Medium, insbesondere die Karte, mit einem Magnetstreifen und/oder einem Chip zu versehen, bzw. bekannte Karten mit einem erfindungsgemäßen Mittel zur Generierung eines akustischen Signales zu versehen. Das akustische Signal kann dabei zur redundanten Individualisierung genutzt werden, so daß die Sicherheit weiter erhöht wird.

Die Erfindung ist anhand der Zeichnungen dargestellt und wird im folgenden näher beschrieben.

Es zeigen:
- **Figur 1**: eine Hand mit Identifikationsmedium in Form einer Karte,
- **Figur 2**: eine Karte in Draufsicht (a) und in Ansicht (b),
- **Figur 3**: die Zunge einer Karte mit verschiedenen Ausformungen und
- **Figur 4**: eine beidseitig eingespannte Zunge.

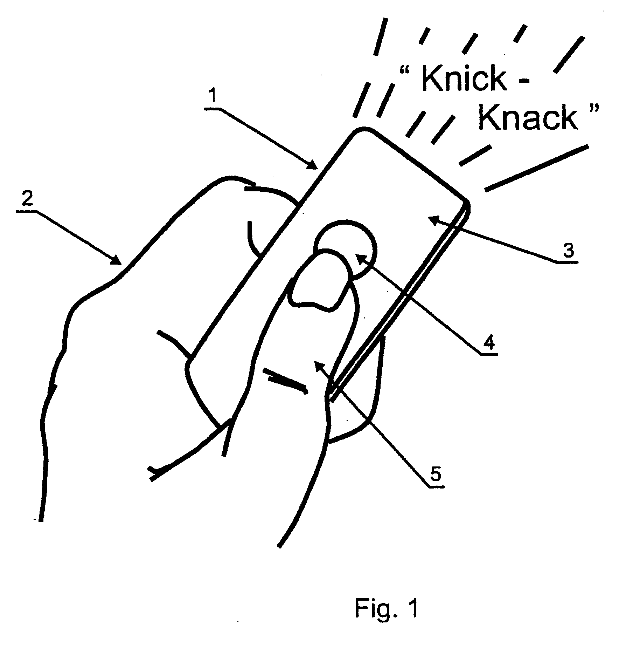

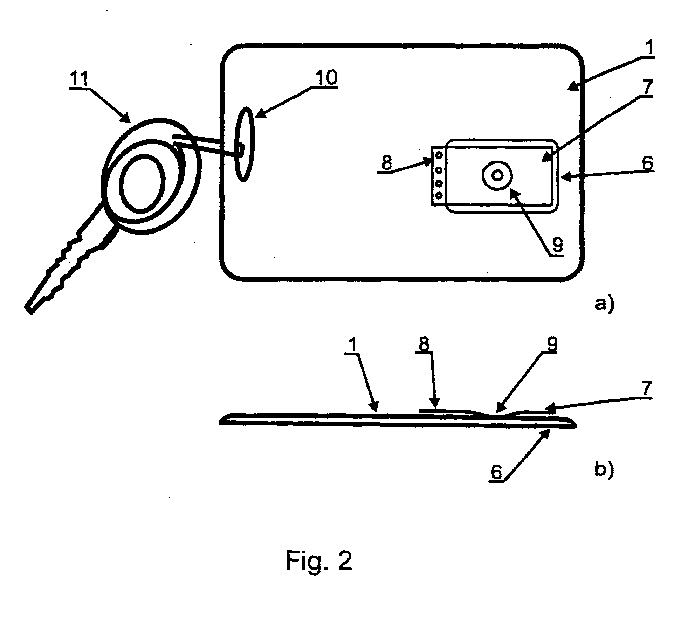

In Figur 1 ist ein Identifikationsmedium in Form einer Karte 1 im bekannten Scheckkartenformat gezeigt, die in der Hand 2 eines Benutzers des Systemes gehalten wird. Auf der Karte 1 ist individuelle Information in dem akustischen Signal kodiert, die eine in die Kartenoberfläche 3 eingeformte gewölbte Fläche 4 abgibt, wenn diese durch Druck des Daumens 5 über einen Widerstand eingedrückt wird. In dem Frequenzspektum des Geräusches ("Knick-Knack") ist die Information kodiert.
Die Karte 1 ist in bekannter Weise aus Kunststoff (PE) gefertigt und dient als Resonanzkörper. In die Karte ist eine Ausnehmung 6 eingebracht, die im Falle des Beispiels nach Figur 2 von einer Zunge 7 überdeckt wird. Die Zunge 7 ist aus Metall geformt und unter Vorspannung auf die Karte mittels der Schweißpunkte 8 befestigt. Die Zunge 7 weist eine Vertiefung 9 auf, die eine Spannung erzeugt und daher das Frequenzspektrum des akustischen Signales beeinflußt. Die Karte 1 nach Figur 2 weist eine Aussparung 10 auf, an die ein Schlüssel 11 angehängt werden kann.

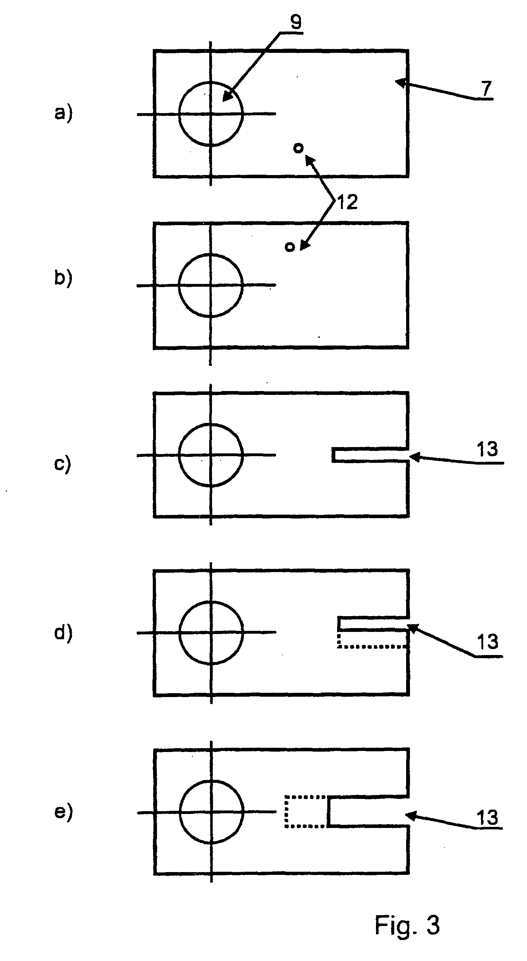

In Figur 3 sind verschieden geformte und damit verschiedene Geräusche erzeugende Zungen 7 gezeigt. Alle Zungen weisen eine Vertiefung 9 auf. In die Zungen nach den Figuren a) und b) sind kleine Bohrungen 12 eingebracht, die zu einer Verschiebung des Frequenzspektrums führen. Die Bohrungen 12 sind an verschiedenen Orten der Zungen 7 angebracht und erzeugen daher unterschiedliche Frequenzen. In die Zungen 7 der Beispiele c), d) und e) sind Schlitze 13 eingebracht, die an unterschiedlichen Stellen oder in unterschiedlichen Abmessungen vorgesehen sind. Die gezeigten Veränderungen an der Zunge 7, die von den Benutzern selber vorgenommen werden können, bedingen Unterschiede im Frequenzspektrum, die, wie Versuche zeigten, von dem System wahrgenommen werden können.

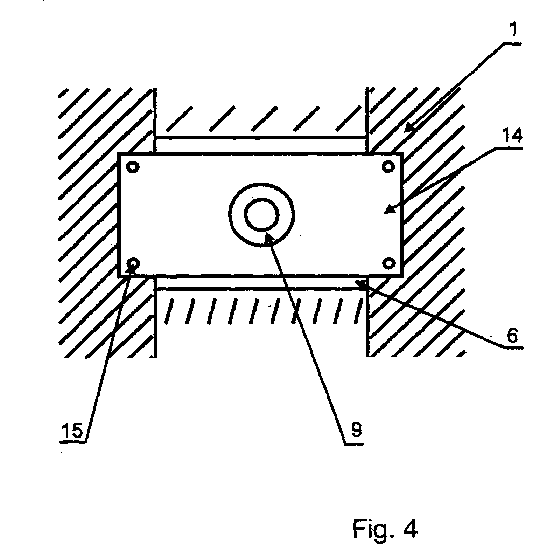

In Figur 4 ist der Ausschnitt einer Karte 1 mit Ausnehmung 6 gezeigt, wobei die Ausnehmung 6 von einer Zunge 14 überdeckt wird. Die Zunge 14 ist beidseitig mit Nieten 15 an der Karte befestigt und weist zur Individualisierung eine Vertiefung 9 auf. Die Beeinflussung des Frequenzspektrums kann in diesem Ausführungsbeispiel durch die Spannung variiert werden, mit der die zunge 14 eingespannt ist.

## Patentansprüche

1. System umfassend ein tragbares ldentifikationsmedium (1) und eine Kontrolleinheit, mit der auf dem Identifikationsmedium (1) kodierte Information lesbar ist, wobei die Kontrolleinheit einem Benutzer den Zugang zum System freigibt, wenn die Identität des Identifikationsmediums (1) festgestellt ist, und
wobei das Identifikationsmedium (1) ein Mittel (4) aufweist, mit dem auf mechanischem Wege ein reproduzierbares akustisches Signal erzeugbar ist, in dessen Frequenzspektum die Information kodiert ist, wobei das Mittel eine Zunge (7), eine Platte und/oder eine gewölbte Fläche (4) aufweist, die unter Überwindung eines Anfangswiderstandes khickbar ist, wobei das knicken ein die Kodierung enthaltendes Knack-Geräusch erzeugt und wobei die Zunge (7), die Platte oder die Fläche (4) nach der Beaufschlagung in ihre ursprüngliche Position zurückfedert, wobei die Kodierung durch die individuelle Formgebung der Zunge (7), der Platte oder der Fläche (4) erfolgt..

2. System nach Anspruch 1, **dadurch gekennzeichnet, daß** die Kontrolleinheit ein Mikrophon aufweist, über welches das akustische Signal einer Recheneinheit zuführbar ist, wobei die Recheneinheit die Identifizierung des Signales durchführt.

3. System nach Anspruch 1 oder 2, **dadurch gekennzeichnet, daß** das Identifikationsmedium eine Karte (1) insbesondere aus Kunststoff und insbesondere in den Abmessungen einer Kreditkarte ist.

4. System nach einem der vorherigen Ansprüche, **dadurch gekennzeichnet, daß** das Identifikationsmedium (1) einen Membrankörper oder einen Resonanzkörper bildet.

5. System nach einem der vorherigen Ansprüche, **dadurch gekennzeichnet, daß** der Kontrolleinheit ein Code, insbesondere ein akustischer PIN-Code eingebbar ist.

6. Identifikationsmedium (1), insbesondere zum Einsatz in einem System nach den Ansprüchen 1 bis 5 mit einem Mittel (4), das bei mechanischer Beaufschlagung durch den Benutzer (5) ein reproduzierbares akustisches Signal abgibt, wobei das Mittel eine Zunge (7), eine Platte und/oder eine gewölbte Fläche (4) aufweist, die unter Überwindung eines Anfangswiderstandes knickbar ist, wobei das Knicken ein die Kodierung enthaltendes Knack-Geräusch erzeugt und wobei die Zunge (7), die Platte oder die Fläche (4) nach der Beaufschlagung in ihre ursprüngliche Position zurückfedert, wobei die Kodierung durch die individuelle Formgebung der Zunge (7), der Platte oder der Fläche (4) erfolgt.

7. Identifikationsmedium nach den Ansprüchen 6 bis 7, **dadurch gekennzeichnet, daß** die Kodierung durch die individuelle Formgebung des Membrankörpers oder des Resonanzkörpers erfolgt.

8. Identifikationsmedium nach den Ansprüchen 6 bis 8, **dadurch gekennzeichnet, daß** die Zunge (7), die Platte oder die Fläche (4) an dem als Karte ausgebildeten Identifikationsmedium angeformt ist.

9. Identifikationsmedium nach den Ansprüchen 6 bis 9, **dadurch gekennzeichnet, daß** die Codierung durch den Benutzer selber dadurch durchführbar ist, daß Ausstanzungen in die Zunge einbringbar sind oder Vertiefungen in die Zunge eindrückbar sind oder durch Formgebung der gewölbten Fläche der Zunge.

## Claims

1. System comprising a portable identification medium (1) and a control unit with which information coded on the identification medium (1) is readable, wherein the control unit allows a user access to the system when the identity of the information medium (1) has been detected, and wherein the identification medium (1) has a means (4) for mechanically producing a reproducible acoustic signal in whose frequency spectrum the information is coded, the means having a tongue (7), plate and/or arched surface (4) which is bendable once an initial resistance has been overcome, the bending producing a cracking noise containing the coding, the tongue (7), plate or surface (4) springing back into its original position after being acted upon, the coding being accomplished through the individual forming of the tongue (7), plate or surface (4).

2. System according to claim 1, **characterized in that** the control unit has a microphone through which the acoustic signal can be supplied to a computing unit, the computing unit performing the identification of the signal.

3. System according to claim 1 or 2, **characterized in that** the identification medium is a card (1), more particularly a card made of plastic and more particularly having the dimensions of a credit card.

4. System according to any one of the preceding claims, **characterized in that** the identification medium (1) forms a membrane body or resonance body.

5. System according to any one of the preceding claims, **characterized in that** a code, more particularly an acoustic PIN code, can be entered in the control unit.

6. Identification medium (1), more particularly for use in a system according to claims 1 to 5, with a means (4) which emits a reproducible acoustic signal when mechanically acted upon by the user (5), the means having a tongue (7), plate and/or arched surface (4) which is bendable once an initial resistance has been overcome, the bending producing a cracking noise containing the coding, the tongue (7), plate or surface (4) springing back into its original position after being acted upon, the coding being accomplished through the individual forming of the tongue (7), plate or surface (4).

7. Identification medium according to claims 6 to 7, **characterized in that** the coding is accomplished through the individual forming of the membrane body or resonance body.

8. Identification medium according to claims 6 to 8, **characterized in that** the tongue (7), plate or surface (4) is integrally formed on the identification medium having the form of a card.

9. Identification medium according to claims 6 to 9, **characterized in that** the coding is performed by the user himself **in that** holes can be punched in the tongue or indentations can be made in the tongue or through forming of the arched surface of the tongue.

## Revendications

1. Système comprenant un moyen d'identification portatif (1) et une unité de contrôle, avec laquelle une information codée sur le moyen d'identification (1) peut être lue, l'unité de contrôle permettant l'accès au système pour un utilisateur lorsque l'identité du moyen d'identification (1) est déterminée, et le moyen d'identification (1) présentant un moyen (4), avec lequel peut être généré par voie mécanique un signal acoustique reproductible, dans le spectre des fréquences duquel l'information est codée, le moyen présentant une lame (7), une plaque et/ou une surface bombée (4), lesquelles sont pliables après avoir surmonté une résistance initiale, le pliage générant un déclic comportant le codage et la lame (7), la plaque ou la surface (4) revenant comme un ressort à leur position initiale après le déploiement de pression, le codage ayant lieu par le façonnage individuel de la lame (7), de la plaque ou de la surface (4).

2. Système selon la revendication 1, **caractérisé en ce que** l'unité de contrôle présente un microphone, par lequel le signal acoustique peut être amené à une unité de calcul, l'unité de calcul effectuant l'identification du signal.

3. Système selon la revendication 1 ou 2, **caractérisé en ce que** le moyen d'identification (1) est une carte, notamment en plastique et notamment avec les dimensions d'une carte de crédit.

4. Système selon l'une des revendications précédentes, **caractérisé en ce que** le moyen d'identification (1) forme un corps à membrane ou un corps sonore.

5. Système selon l'une des revendications précédentes, **caractérisé en ce qu'**un code, notamment un code PIN acoustique, peut être entré dans l'unité de contrôle.

6. Moyen d'identification (1), notamment pour l'utilisation dans un système selon les revendications 1 à 5 avec un moyen (4) qui, lors d'un déploiement mécanique de pression par l'utilisateur (5), émet un signal acoustique reproductible, le moyen présentant une lame (7), une plaque et/ou une surface bombée (4), pliable en surmontant une résistance initiale, le pliage générant un déclic comportant le codage et la lame (7), la plaque ou la surface (4) revenant comme un ressort à leur position initiale après le déploiement de pression, le codage ayant lieu par le façonnage individuel de la lame (7), de la plaque ou de la surface (4).

7. Moyen d'identification selon la revendication 6, **caractérisé en ce que** le codage a lieu par le façonnage individuel du corps à membrane ou du corps sonore.

8. Moyen d'identification selon les revendications 6 à 7, **caractérisé en ce que** la lame (7), la plaque ou la surface (4) sont adaptées au moyen d'identification ayant la forme d'une carte.

9. Moyen d'identification selon les revendications 6 à 8, **caractérisé en ce que** le codage peut être effectué par l'utilisateur lui-même, et cela par des poinçons pouvant être appliqués à la lame ou des empreintes pouvant être enfoncées dans la lame ou par le façonnage de la surface bombée de la lame.
